# EUROPÄISCHE PATENTSCHRIFT

(11) **EP 3 243 369 B1**
(45) Veröffentlichungstag und Bekanntmachung des Hinweises auf die Patenterteilung: **29.05.2019**
(21) Anmeldenummer: 17166560.7
(22) Anmeldetag: 13.04.2017
(51) Int. Cl.: A01B 71/04, F16C 35/06

(54) **LANDWIRTSCHAFTLICHE MASCHINE UND LAGERANORDNUNG EINER SOLCHEN LANDWIRTSCHAFTLICHEN MASCHINE**
AGRICULTURAL MACHINE AND BEARING ASSEMBLY OF SUCH AN AGRICULTURAL MACHINE
MACHINE AGRICOLE ET AGENCEMENT DE PALIER D'UNE TELLE MACHINE AGRICOLE

(30) Priorität: 28.04.2016 DE 102016107948
(43) Veröffentlichungstag der Anmeldung: 15.11.2017
(73) Patentinhaber: Horsch Maschinen GmbH, 92421 Schwandorf (DE)
(72) Erfinder: HORSCH, Philipp, 92421 Schwandorf (DE); PIRKENSEER, Michael, 92421 Schwandorf (DE)
(74) Vertreter: Benninger, Johannes

(56) Entgegenhaltungen:
- DE-A1-102013 102 871
- GB-A- 2 471 680
- US-A- 2 618 518
- US-A1- 2002 164 101

## Beschreibung

Die vorliegende Erfindung betrifft eine Lageranordnung für eine landwirtschaftliche Maschine zur drehbaren Lagerung von landwirtschaftlichen Werkzeugen, Walzen oder dergleichen mit den Merkmalen des unabhängigen Anspruchs 1. Zudem betrifft die Erfindung eine landwirtschaftliche Maschine mit einer solchen Lageranordnung.

In der Landwirtschaft werden die unterschiedlichsten Vorrichtungen und Werkzeuge zur Bodenbearbeitung eingesetzt. Die Bodenbearbeitungsvorrichtungen können mit unterschiedlichen Bodenbearbeitungswerkzeugen wie beispielsweise mit Scharen und/oder Schneidscheiben und/oder Zinken ausgestattet sein, wobei sich diese oder unterschiedliche Werkzeuge in Fahrtrichtung in mehreren hintereinander angeordneten Reihen befinden können. Soll der Boden bspw. für die Aussaat vorbereitet werden, können typischerweise sogenannte Packer und/oder Walzen eingesetzt werden, welche als Nachlaufgeräte nach den Bodenbearbeitungswerkzeugen eingesetzt werden. Durch den Einsatz derartiger Packer und/oder Walzen wird der zuvor mit den Bodenbearbeitungswerkzeugen gelockerte Boden in feinere Strukturen zerteilt sowie verdichtet. Die jeweils rotierenden Wellen der rotierenden Packer und/oder der rotierenden Walzen sind dabei um eine im Wesentlichen horizontale Achse rotierend angeordnet und einem Rahmen der Bodenbearbeitungsvorrichtung zugeordnet bzw. in einem Rahmen der Vorrichtung drehbar gelagert. Um die jeweilige Welle mit dem Rahmen der Bodenbearbeitungsvorrichtung verbinden und lagern zu können, sind an beiden Enden der jeweiligen Welle Lagerstummel vorgesehen.

Aus dem Stand der Technik sind zahlreiche unterschiedliche Lösungen zur Ausbildung einer Lagerung von rotierenden landwirtschaftlichen Werkzeugen wie bspw. Walzen oder dergleichen bekannt. So ist es bekannt, Lagerstummel an beiden Enden einer Welle unlösbar zu befestigen, was beispielsweise mittels Schweißverbindungen erfolgen kann. Auf diese Lagerstummel kann jeweils ein Lager fixiert werden. Zur axialen Sicherung des Lagers auf seinem Sitz kann zusätzlich jeweils ein Deckel auf den Lagerstummeln vorgesehen sein. Da Packer und/oder Walzen in mehreren unterschiedlichen Maschinen eingesetzt werden und hierfür jeweils anzupassen sind, weichen die Maße der Lagerstummel und die Maße des Rahmens je nach verwendetem Bodenbearbeitungswerkzeug ab. Zum Ausgleich von Toleranzen ist es zudem bekannt, Passscheiben und/oder Ausgleichsbleche zu verwenden.

Für die Dimensionierung der Lager, deren Einbaupositionen, was auch für die zu lagernden rotierenden Teile wie Packer oder Walzen gilt, haben sich in der Praxis zwar einige Maße als üblich erwiesen, da sie häufig verwendet werden, doch fehlt eine verbindliche Normierung. Diese fehlende Normierung der Einbauposition der Lageranordnung hat sich in der Praxis als nachteilig erwiesen. Nachteilig ist es auch, dass bei einem Verschleiß und/oder bei einer Wartung des Lagerstummels aufgrund der bspw. durch Schweißen hergestellten unlösbaren Verbindung zwischen Lagerstummel und Welle die gesamte Welle ausgetauscht werden muss. Folglich ergeben sich hohe Kosten bei der Instandhaltung und bei der Wartung der Bodenbearbeitungswerkzeuge. Zugleich hat sich die Dichtung der bekannten Lageranordnung als problematisch und oftmals als unzureichend erwiesen.

Die US 2002/0164101 A1 offenbart eine Lageranordnung einer landwirtschaftlichen Maschine zur drehbaren Lagerung von rotierenden Walzen, umfassend einen der rotierender Walze zuordenbaren und dort stirnseitig befestigbaren Lagerstummel mit zumindest einem dem Lagerstummel zugeordneten Absatz und ein vom Lagerstummel geführtes Wälzlager, dessen Innenring im montierten Zustand am Absatz des Lagerstummels anliegt.

Die DE 10 2013 102 871 A1 offenbart eine landwirtschaftliche Maschine mit einer Lageranordnung, bei der ein Tragkörper in für Verschleiß wenig anfälliger Weise mit den Tragarmen eines Tragrahmens verbunden werden soll. Um dies zu erreichen, sind ein Wälzlager über ein Lagergehäuse lösbar an einer Tragkörperwand sowie ein Lagerbolzen lösbar am zugeordneten Tragarm befestigt. Zudem ist der Lagerbolzen mit der Tragkörperwand über das Wälzlager und das Lagergehäuse verbunden. Die Wälzlager zur Lagerung der rotierenden Teile sind mit Lagergehäusen an im Wesentlichen endseitig am Tragkörper vorgesehenen Tragkörperwänden befestigt und jeweils mit einem Tragarm des Tragkörpers über einen Lagerbolzen verbunden.

Es kann allerdings als nachteilig empfunden werden, dass diese Lageranordnung zweigeteilt ist. D.h., während ein Teil der Lageranordnung am Rahmen befestigt ist, ist der andere Teil der Lageranordnung an der Packerwelle fixiert, woraus sich Probleme in der Abdichtung der Lageranordnung ergeben können. Aufgrund der Zweiteilung der Lagerung baut diese zudem relativ hoch, so dass viel Bauraum benötigt wird. Nachteilig ist auch, dass der Innenring des Lagers fest mit der Packerwelle verschraubt ist bzw. dass an der Packerwelle jeweils ein passendes Bohr- bzw. Anschraubbild vorhanden sein muss, so dass es auf diese Weise kaum möglich erscheint, vorhandene Maschinen mit solchen Lageranordnungen nachzurüsten.

Der Erfindung liegt daher die Aufgabe zugrunde, eine verbesserte und vereinfachte Lageranordnung zur Verfügung zu stellen, bei welcher die im Stand der Technik bekannten Nachteile überwunden werden können. Es soll zudem eine Lageranordnung geschaffen werden, welche einen einfachen Aufbau besitzt, die kostengünstig ist und die bei einem Verschleiß schnell und auf einfache Art und Weise ausgetauscht werden kann. Außerdem soll es mit der Erfindung ermöglicht werden, ein herkömmliches Wälzlager zu verwenden, ohne dass auf Spezialbauteile zurückgegriffen werden muss.

Diese Aufgaben werden durch eine Lageranordnung für eine landwirtschaftliche Maschine zur drehbaren Lagerung von landwirtschaftlichen Werkzeugen, Walzen oder dergleichen mit den Merkmalen im unabhängigen Anspruch 1 gelöst. Weitere vorteilhafte Ausgestaltungen und Weiterbildungen der Erfindung sind in den jeweiligen abhängigen Ansprüchen beschrieben.

Zur Lösung der genannten Aufgaben schlägt die Erfindung eine Lageranordnung für eine landwirtschaftliche Maschine zur drehbaren Lagerung von landwirtschaftlichen Werkzeugen, Walzen oder dergleichen vor. Die erfindungsgemäße Lageranordnung weist zumindest einen wechselbaren Lagerstummel mit zumindest einem dem Lagerstummel zugeordneten Absatz und einem ersten Gewinde auf. Der zumindest eine Absatz kann an einem Ende des wechselbaren Lagerstummels vorgesehen sein und einen Kopf des wechselbaren Lagerstummels ausbilden. Ebenso kann der Absatz auch als separates Teil ausgeführt sein und bspw. mit dem Lagerstummel verschraubt werden oder anderweitig mit diesem verbunden werden. Der zumindest eine Absatz kann in Form eines Sechskants, Vierkants und/oder dergleichen ausgebildet sein. Alternativ kann der zumindest eine Absatz zumindest näherungsweise einen runden Querschnitt ausbilden. An den zumindest einen Absatz kann sich in Längserstreckungsrichtung des wechselbaren Lagerstummels eine erste Hülse anschließen, welche einen geringeren Durchmesser als der zumindest eine Absatz aufweist. Die erste Hülse kann zylindrisch, vorzugsweise konisch, ausgebildet sein. An die erste Hülse kann sich in Längserstreckungsrichtung des wechselbaren Lagerstummels eine zweite Hülse anschließen. Die zweite Hülse kann einen geringen Durchmesser als die erste Hülse aufweisen und ebenfalls zylindrisch, bspw. konisch, ausgebildet sein. Die zweite Hülse kann ein erstes Gewinde ausbilden, welches erste Gewinde als Außengewinde ausgebildet sein kann. Alternativ können die erste Hülse und die zweite Hülse einen gleichen Querschnitt und Durchmesser aufweisen. Der wechselbare Lagerstummel kann eine durchgehende Öffnung umfassen, welche zentral angeordnet ist. Die durchgehende Öffnung kann vorzugsweise als Innenbohrung ausgebildet sein. Die durchgehende Öffnung des wechselbaren Lagerstummels kann in wenigstens drei Abschnitte eingeteilt werden, wobei sich ein erster Abschnitt zumindest bereichsweise über die Breite des zumindest einen Absatzes, ein zweiter Abschnitt zumindest bereichsweise über die Länge der ersten Hülse und ein dritter Abschnitt zumindest bereichsweise über die Länge der ersten Hülse und zumindest bereichsweise über die Länge der zweiten Hülse, insbesondere des ersten Gewindes, erstrecken können. Die Durchmesser der wenigstens drei Abschnitte können unterschiedlich groß ausgebildet sein. Vorzugsweise kann der dritte Abschnitt einen größeren Durchmesser als der erste und der zweite Abschnitt der durchgehenden Öffnung aufweisen, während der erste Abschnitt einen größeren Durchmesser als der zweite Abschnitt der durchgehenden Öffnung ausbilden kann. Die durchgehende Öffnung des wechselbaren Lagerstummels kann einen runden und/oder einen eckigen Querschnitt ausbilden. Alternativ können die Durchmesser der wenigstens drei Abschnitte auch zumindest näherungsweise gleich ausgebildet sein. In die durchgehende Öffnung des wechselbaren Lagerstummels kann ein Schraubelement beispielsweise in Form einer Schraube und/oder dergleichen eingeführt werden.

Weiter weist die Lageranordnung ein Wälzlager auf, welches vom Lagerstummel geführt wird und der Innenring des Wälzlagers am zumindest einen Absatz anliegt. Dies kann bedeuten, dass das Wälzlager zumindest abschnittsweise vom wechselbaren Lagerstummel aufgenommen werden kann. Der wechselbare Lagerstummel kann folglich für eine Zentrierung des Wälzlagers bei der Montage der Lageranordnung dienen. Das Wälzlager kann einen Lagerinnenring und einen Außenring umfassen. Bei einer aufgenommen Position des Wälzlagers vom wechselbaren Lagerstummels kann eine Stirnseite des Lagerinnenrings zumindest abschnittsweise bündig an eine Rückseite des zumindest einen Absatzes des wechselbaren Lagerstummels anliegen.

Die Lageranordnung weist eine Aufnahme mit konisch verlaufender Kontur und daran anschließendem zweiten Gewinde auf, woraus resultierend eine durchgehende Ausnehmung gebildet wird. Die Aufnahme kann Teil eines Achsstummels sein und kann zumindest abschnittsweise in einer jeweils an einer Stirnseite der Welle vorhandenen Öffnung eingesetzt werden. Ein Querschnitt des Achsstummels kann folglich zumindest näherungsweise einem Querschnitt der Welle entsprechen. Der zumindest eine zweite Absatz des Achsstummel kann eine Hinterschneidung mit der Stirnseite der Welle ausbilden und folglich einen größeren Querschnitt als der Achsstummel ausbilden. Der Achsstummel kann jeweils der Stirnseite bzw. der Öffnung der Welle lösbar und/oder unlösbar zugeordnet sein. Als lösbare Verbindungsmethoden wären bspw. sämtliche Press- und/oder Form- und/oder Stoffschlussverbindungen denkbar.

Die konisch verlaufende Kontur kann sich entlang der Längserstreckungsrichtung des zumindest einen zweiten Absatzes und zumindest abschnittsweise entlang des Achsstummels erstrecken sowie im Bereich nahe der Öffnung der Welle liegen. An die konisch verlaufende Kontur schließt sich in Längserstreckungsrichtung der Aufnahme ein zweites Gewinde an. Das zweite Gewinde kann als Innengewinde ausgebildet sein und vollständig und/oder zumindest bereichsweise im Inneren der Welle liegen. Das zweite Gewinde kann sich zumindest abschnittsweise über den Achsstummel erstrecken. In die Aufnahme, insbesondere in dessen Ausnehmung, kann jeweils ein wechselbarer Lagerstummel geführt und zumindest abschnittsweise festgesetzt werden.

Die Lageranordnung umfasst ein Keilelement, welches an der konisch verlaufenden Kontur der Aufnahme anliegt. Das Keilelement kann damit zwischen der konisch verlaufenden Kontur der Aufnahme und dem wechselbaren Lagerstummel angeordnet sein. Das Keilelement kann zur Ausrichtung des wechselbaren Lagerstummels bei der Einführung des Lagerstummels in die Aufnahme dienen.

Der Lagerstummel und die Aufnahme werden über das erste und das zweite Gewinde gemeinsam montiert. Damit wird zum einen der Lagerinnenring axial eingespannt und zum anderen zwischen dem Keilelement und der sich konisch verlaufenden Kontur der Aufnahme eine Formschlussverbindung sowie eine Presspassung erzeugt.

Dies kann bedeuten, dass zwischen dem wechselbaren Lagerstummel und der Aufnahme eine wirkende lösbare Verbindung gebildet wird. Die wirkende lösbare Verbindung kann sich durch das Einschrauben und/oder Eindrehen des wechselbaren Lagerstummels in die Aufnahme ergeben. Hierzu können das erste Gewinde des wechselbaren Lagerstummels und das zweite Gewinde der Aufnahme korrespondierend zueinander ausgebildet sein. Das erste Gewinde und das zweite Gewinde können jeweils als Rechtsgewinde oder als Linksgewinde ausgebildet sein. Durch das Eindrehen des wechselbaren Lagerstummels in die Aufnahme wird der Lagerinnenring axial eingespannt und es wird sowohl eine Formschlussverbindung als auch eine Presspassung zwischen dem Keilelement und der konisch verlaufenden Kontur der Aufnahme erzeugt. Die wirkenden Kräfte können für ein Verpressen des ersten Gewindes des wechselbaren Lagerstummels mit dem zweiten Gewinde der Aufnahme sorgen. Über einen Pressverbund können wirkende Kräfte besser aufgenommen werden.

Das vom wechselbaren Lagerstummel geführte Wälzlager kann sich zumindest abschnittsweise auf der Aufnahme und/oder auf dem Achsstummel abstützen. Zugleich kann der Lagerinnenring zumindest abschnittsweise auf dem wechselbaren Lagerstummel, insbesondere auf dessen erster Hülse, aufliegen.

Es kann vorgesehen sein, dass das Keilelement als separates Teil ausgeführt ist oder das Keilelement in den wechselbaren Lagerstummel integriert ist. Sowohl bei einem Keilelement als separates Teil als auch bei einem in den wechselbaren Lagerstummel integrierten Keilelement kann das Keilelement korrespondierend zur konisch verlaufenden Kontur der Aufnahme ausgebildet sein. Das Keilelement kann zwischen dem wechselbaren Lagerstummel und der konischen verlaufenden Kontur zur Ausrichtung und Unterstützung der Position des wechselbaren Lagerstummels in der Aufnahme dienen.

Gemäß einer Weiterbildung der Erfindung kann der Lagerstummel im Bereich des Gewindes zumindest einen axial verlaufenden Schlitz aufweisen. Vorzugsweise können sich vier axial Schlitze im Bereich des ersten Gewindes angeordnet sein. Der zumindest eine axiale Schlitz kann sich zumindest abschnittsweise in Längserstreckungsrichtung des wechselbaren Lagerstummels erstrecken, wobei der zumindest eine axiale Schlitz im Bereich des ersten Gewindes bzw. der zweiten Hülse des wechselbaren Lagerstummels vorgesehen ist. Alternativ kann der zumindest eine axiale Schlitz zumindest abschnittsweise bis zur ersten Hülse reichen. Bei Montage des wechselbaren Lagerstummels kann das erste Gewinde des wechselbaren Lagerstummels folglich in die Aufnahme eingespreizt werden.

Es kann vorgesehen sein, dass der wechselbare Lagerstummel auf der dem Gewinde gegenüberliegenden Seite einen weiteren Konus aufweist, in welchen ein konisches Ringelement eingreift, wobei dieses wiederrum mittels eines Schraubelements in den weiteren Konus hineingetrieben wird, wodurch zwischen dem ersten Gewinde des Lagerstummels und dem zweiten Gewinde des Lagerstummels eine Flächenpressung entsteht. Als gegenüberliegende Seite des Gewindes, insbesondere des ersten Gewindes, kann zumindest abschnittsweise der dritte Abschnitt der durchgehenden Öffnung des wechselbaren Lagerstummels definiert sein. Der dritte Abschnitt der durchgehenden Öffnung kann durch einen Konus gebildet sein. In diesen dritten Abschnitt der durchgehenden Öffnung kann ein konisches Ringelement eingeführt werden. Ein Durchmesser des konischen Ringelements kann korrespondierend zum Durchmesser und zum Querschnitt des dritten Abschnitts der durchgehenden Öffnung ausgebildet sein. Das konische Ringelement kann eine zentral angeordnete Öffnung umfassen. Das konische Ringelement kann folglich zumindest abschnittsweise vom Schraubelement aufgenommen werden, welches Schraubelement, insbesondere dessen freies Ende, in die durchgehende Öffnung des wechselbaren Lagerstummels geführt werden kann. Durch Drehen bzw. während der Montage des Schraubelements kann das konische Ringelement in den dritten Abschnitt der durchgehenden Öffnung des wechselbaren Lagerstummels festgesetzt werden. Dies kann dafür sorgen, dass das erste Gewinde des wechselbaren Lagerstummels mit dem zweiten Gewinde der Aufnahme verpresst wird. Aufgrund des konischen Ringelements kann eine Kraft auf das erste Gewinde des wechselbaren Lagerstummels und auf das zweite Gewinde der Aufnahme ausgeübt werden, wodurch unabhängig von der Drehbewegung der Walze oder der Bodenbearbeitungswerkzeuge kein Links- und/oder Rechtsgewinde benötigt wird.

Gemäß einer Ausführungsform der Erfindung kann vorgesehen sein, dass das Schraubelement durch die durchgehende Öffnung, insbesondere durch eine Innenbohrung, des wechselbaren Lagerstummels hindurchgeführt wird. Die durchgehende Öffnung kann in wenigstens drei Abschnitte eingeteilt werden, wobei sich ein erster Abschnitt zumindest bereichsweise entlang der Breite des zumindest einen Absatzes, ein zweiter Abschnitt zumindest bereichsweise entlang der Länge der ersten Hülse und ein dritter Abschnitt zumindest bereichsweise entlang der Länge der ersten Hülse und zumindest bereichsweise über die Länge der zweiten Hülse erstrecken können.

Die Durchmesser der wenigstens drei Abschnitte können unterschiedlich groß ausgebildet sein. Vorzugsweise kann der dritte Abschnitt einen größeren Durchmesser als der erste und der zweite Abschnitt aufweisen, während der erste Abschnitt einen größeren Durchmesser als der zweite Abschnitt ausbilden kann.

Es kann vorgesehen sein, dass das Keilelement einen Winkel aufweist, welches zwischen 10° und 50°, insbesondere jedoch zwischen 20° und 40°, liegt. Je nach Ausbildung der konisch verlaufenden Kontur der Aufnahme kann das Keilelement auch einen anderen Winkel einnehmen. Das Keilelement kann jeweils korrespondierend zur konisch verlaufenden Kontur ausgebildet sein.

Es kann vorgesehen sein, dass der Lagerstummel eine Schraubfläche aufweist. Die Schraubfläche kann durch den zumindest einen Absatz zur Verfügung gestellt werden, indem der Kopf des wechselbaren Lagerstummels als Sechskant und/oder als Vierkant und/oder dergleichen ausgebildet ist. Eine weitere Schraubfläche kann durch einen Kopf des Schraubelements bereitgestellt werden.

Gemäß einer Weiterbildung der Erfindung kann vorgesehen sein, dass der Außenring des Wälzlagers fest mit einem Rahmenelement der landwirtschaftlichen Maschine verbunden ist.

Nachfolgend werden nochmals alternative und/oder ergänzende Aspekte der Erfindung anhand von Varianten, Abwandlungen oder detaillierterer Beschreibungsteile erläutert. So kann die Erfindung insbesondere an einer landwirtschaftlichen Bodenbearbeitungsvorrichtung zum Einsatz kommen oder Teil einer solchen landwirtschaftlichen Bodenbearbeitungsvorrichtung sein. Eine solche landwirtschaftliche Bodenbearbeitungsvorrichtung wird typischerweise von einer landwirtschaftlichen Zugmaschine gezogen. Wenn im vorliegenden Zusammenhang von einer Bodenbearbeitungsvorrichtung oder von einer landwirtschaftlichen Bodenbearbeitungsvorrichtung die Rede ist, so kann diese wahlweise auch als Bodenbearbeitungsmaschine bzw. als landwirtschaftliche Bodenbearbeitungsmaschine bezeichnet werden. Die verwendeten Begriffe sind insofern als synonym zu verstehen. Diese Klarstellung soll auch für die obigen Beschreibungspassagen wie auch für nachfolgende Passagen und die Figurenbeschreibung gelten.

Die beispielhaft zu verstehende Bodenbearbeitungsvorrichtung kann bspw. vereinzelt oder in mehreren Reihen eine Mehrzahl oder Vielzahl von Bodenbearbeitungswerkzeugen umfassen. So kann die Bodenbearbeitungsvorrichtung beispielsweise etwa zwei, drei oder vier hintereinander angeordnete Reihen mit jeweils zueinander beabstandeten Federzinken oder andere bodenfurchende Werkzeuge aufweisen. Solche Federzinken sorgen für eine Lockerung des Bodens, wenn sie diesen furchend bearbeiten. Den z.B. vier Reihen mit Federzinken kann ein sich über die gesamte Arbeitsbreite der Vorrichtung erstreckendes rotierendes Walzenwerkzeug nachgeordnet sein. Das Walzenwerkzeug oder ein anderes rotierendes Werkzeug umfasst eine um eine im Wesentlichen horizontale Achse drehende Welle mit daran befestigten Federelementen oder auch mit Messerelementen oder kann auch als Stachelwalze o. dgl. ausgebildet sein. Federelemente dienen z.B. vorrangig dem Zerkleinern der beim Einsatz der Federzinken aufgeworfenen Erde, einer Einebnung und/oder einer abschließenden (Teil-)Verdichtung des Bodens, um den Boden bspw. für eine nachfolgende Aussaat vorzubereiten. Die rotierende Welle umfasst zu ihrer Aufhängung und Lagerung an einem Rahmen der Bodenbearbeitungsvorrichtung jeweils an ihren Enden eine Lageranordnung.

Das rotierende Bodenbearbeitungswerkzeug kann bspw. die Form einer rotierenden Messerwalze haben. Eine solche rotatorisch gelagerte Messerwalze umfasst eine um eine im Wesentlichen horizontale Achse drehende Welle. Entlang des Umfangverlaufes und über die Breite bzw. entlang der Längsachse der Welle sind auf dieser zahlreiche Messer angeordnet. Die Messer können wahlweise entlang der Längserstreckungsrichtung der Welle schräg angeordnet sein. Die Messer sind vorzugsweise mittels geeigneter Befestigungsmittel, bspw. in Form von Schraubelementen, lösbar an die Welle fixiert, wobei die Flachseiten der Messer in etwa senkrecht zum Außenumfang der Welle ausgerichtet sind. An den stirnseitigen Enden der Welle ist jeweils eine Lageranordnung vorgesehen. Über die Lageranordnungen zu beiden Stirnseiten kann die Welle an einem Rahmen der Bodenbearbeitungsvorrichtung gelagert werden. Mehrere rotierende Werkzeuge mit jeweiligen Wellen sind in entsprechender Weise gelagert, sofern mehr als eine Welle vorhanden ist. Der die Werkzeuge tragende Rahmen kann wahlweise schwenkbar oder höhenverstellbar ausgebildet sein, kann jedoch wahlweise auch starr bzw. ein Teil eines Tragrahmens der Bodenbearbeitungsvorrichtung sein.

Die rotierend gelagerte Welle des Walzenwerkzeugs ist normalerweise hohl ausgebildet und umfasst jeweils an ihren stirnseitigen Enden bzw. an ihren Stirnseiten eine Öffnung. Ggf. kann die Welle aber auch massiv ausgestaltet sein und muss an ihren Stirnseiten entsprechend gestaltet sein, um die Lageranordnungen aufnehmen zu können. In die stirnseitige Öffnung an einer der beiden Stirnseiten der Welle kann bspw. eine ringartige Aufnahme eingesetzt sein. Diese ringartige Aufnahme bildet einen Teil eines Achsstummels mit einem Absatz, der hier auch als zweiter Absatz bezeichnet werden kann. Der zumindest eine zweite Absatz kann wahlweise eine Hinterschneidung für die Stirnseite der Welle ausbilden. Die Aufnahme kann insbesondere durch einen Ring gebildet sein oder eine ringförmige Kontur aufweisen, dessen/deren annähernd zylindrische Außenmantelfläche in einen korrespondierenden Innenmantel der hohlen Welle an deren Stirnseite eingesetzt ist. Um die ringförmige Aufnahme dort einzusetzen und festzulegen, kann sie bspw. mittels Pressverbindung mit der Welle verbunden werden. Die zur Welle weisende innere Stirnseite der Aufnahme weist normalerweise keine besondere Funktion auf und braucht deshalb nicht weiter konkretisiert werden. Da die Aufnahme jedoch weitere Bauteile trägt bzw. als Fixierung für weitere Funktionsteile dienen soll, weist sie vorzugsweise weitere Funktionsflächen auf. So weist die ringförmige Aufnahme an ihrer zur stirnseitigen Außenseite der Welle weisenden Stirn- bzw. Flachseite vorzugsweise eine konisch verlaufende Kontur und ein zweites Gewinde bzw. Innengewinde auf, die gleichzeitig die sich aneinander anschließenden Funktionsflächen einer in Längsrichtung verlaufenden inneren durchgehende Ausnehmung der Aufnahme bilden können. Die zur äußeren Stirnseite weisende konisch verlaufende Kontur weist insbesondere eine hohlkegelartige Kontur auf, die sich nach außen zur Stirnseite der Aufnahme hin aufweitet und sich nach innen hin verjüngt. Nach innen setzt sich die sich verjüngende hohlkegelartige Kontur der konisch verlaufenden Kontur im Innengewinde fort, das hier auch als zweites Gewinde bezeichnet ist. Das Innengewinde kann insbesondere ein Durchgangsgewinde sein, das sich von der konisch verlaufenden Kontur bis zur gegenüberliegenden Stirn- bzw. Flachseite der Aufnahme erstreckt; damit ist die zur anderen Stirnseite der Welle weisende innere Flach- bzw. Stirnseite der Aufnahme gemeint.

Damit die ringförmige Aufnahme in definierter Position an der Stirnseite der Welle festlegbar ist, weist die Aufnahme an ihrem Außenumfang sinnvollerweise zumindest zwei sich in ihrer Längsrichtung aneinander anschließende Funktionsflächen auf. Dies ist zum einen die zylindrische Außenmantelfläche, die mit der Innenmantelfläche der Welle korrespondiert, bspw. zur Ausbildung einer Presspassung. An diese zylindrische Außenmantelfläche schließt sich in Richtung zur äußeren Flach- bzw. Stirnseite der Aufnahme vorzugsweise der schon erwähnte Absatz bzw. zweite Absatz an, der bspw. durch einen Ringabschnitt größeren Durchmessers als der in der Innenmantelfläche der Welle eingesetzte zylindrische Abschnitt der Aufnahme gebildet sein kann. Der zweite Absatz kann bspw. an seiner zur Stirnseite der Welle weisenden Rückseite konisch abgeschrägt sein.

Außerdem kann vorgesehen sein, dass die Aufnahme sich zumindest im Bereich des zumindest einen zweiten Absatzes und das zweite Gewinde bzw. das Innengewinde über den Achsstummel und zumindest abschnittsweise über den zumindest einen zweiten Absatz erstreckt. Dies kann auch dadurch ausgedrückt werden, dass der Achsstummel im Wesentlichen durch die Aufnahme gebildet ist, deren insbesondere vier Funktionsabschnitte außen durch den zylindrischen äußeren Mantel, den demgegenüber verdickten zweiten Absatz und innen bzw. an der inneren Durchgangsöffnung durch den hohlkegelartigen Abschnitt bzw. die konisch verlaufende Kontur und das sich anschließend fortsetzende Innengewinde (zweites Gewinde) gebildet sind. Der Achsstummel, gebildet durch die Aufnahme, verbleibt normalerweise an der Welle, auch wenn nachfolgend näher beschriebene Verschleißteile wie insbesondere ein im Gebrauch verschleißendes Wälzlager ausgewechselt werden müssen.

Die Lageranordnung umfasst weiterhin gemäß der hier beschriebenen Variante einen wechselbaren Lagerstummel, der in die Aufnahme einsetzbar ist. Der stiftartige und wechselbare Lagerstummel umfasst vorzugsweise zumindest an einer Stirnseite einen dem Lagerstummel zugeordneten Absatz. Der zumindest eine Absatz bildet den sogenannten Kopf des wechselbaren Lagerstummels aus kann bspw. als Sechskant oder als sonstiger Werkzeugkopf ausgebildet sein. In Längserstreckungsrichtung des bspw. zylindrisch geformten wechselbaren Lagerstummels schließt sich eine erste Hülse und eine zweite Hülse an, wobei diese Begriffe der ersten und zweiten Hülse eher funktional zu verstehen sind, da es sich um integrierte Abschnitte des Lagerstummels handelt, nicht etwa um separate Bauteile oder vom Lagerstummel trennbare Teile. Die zweite Hülse kann bspw. ein erstes Gewinde ausbilden oder ein solches Gewinde trage. Bei dem ersten Gewinde handelt es sich vorzugsweise um ein Außengewinde. Der zumindest eine Absatz, die erste Hülse und die zweite Hülse unterscheiden sich vorzugsweise bzw. sinnvollerweise durch ihre jeweiligen Durchmesser, wobei ein Durchmesser des zumindest einen Absatzes größer ist als die Durchmesser der ersten Hülse und der bspw. das Außengewinde ausbildenden zweiten Hülse, und wobei der Durchmesser der ersten Hülse größer ist als der Durchmesser der zweiten Hülse.

Der wechselbare Lagerstummel kann weiterhin eine in Längserstreckungsrichtung durchgehende und zentral angeordnete Innenbohrung aufweisen, welche vorzugsweise abschnittsweise zylindrisch und/oder zumindest bereichsweise konisch ausgebildet ist. Die Innenbohrung lässt sich entlang ihrer Längserstreckungsrichtung in zwei, drei oder mehr Abschnitte einteilen, wobei insbesondere drei Abschnitte sinnvoll sind. Ein zur stirnseitigen Außenseite der Welle weisender erster Abschnitt der Innenbohrung kann sich zumindest bereichsweise über die Breite des zumindest einen Absatzes an der Außenseite des Lagerstummels erstrecken. Ein sich in Längserstreckungsrichtung der Innenbohrung daran anschließender zweiter Abschnitt mit gegenüber dem ersten Abschnitt reduziertem Innendurchmesser kann sich zumindest bereichsweise über die Länge der ersten Hülse erstrecken. Ein gegenüber dem Innendurchmesser des zweiten Abschnittes aufgeweiteter dritter Abschnitt kann sich zumindest bereichsweise über die Länge der ersten Hülse und zumindest bereichsweise über die Länge der zweiten Hülse erstrecken. Der dritte Abschnitt bildet vorzugsweise einen sich in Richtung zur Stirnseite des Lagerstummels, die der am Absatz liegenden Stirnseite gegenüber liegt, aufweitenden Innenkonus aus. Im Bereich des ersten Gewindes bzw. des Außengewindes kann der wechselbare Lagerstummel insbesondere mindestens drei, ggf. auch vier oder mehr axiale Schlitze aufweisen, die dem Außengewinde eine elastische Flexibilität in radialer Richtung verleihen.

Der wechselbare Lagerstummel ist insbesondere dafür vorgesehen und dazu ausgebildet, ein Wälzlager zu führen, d.h. das Wälzlager wird vom wechselbaren Lagerstummel zumindest abschnittsweise aufgenommen, und der wechselbare Lagerstummel sorgt dabei für eine Zentrierung und Ausrichtung des Wälzlagers. Ein Lagerinnenring des Wälzlagers kann dabei an der Rückseite des zumindest einen Absatzes des wechselbaren Lagerstummels bündig anliegen. Zugleich liegt der Lagerinnenring zumindest abschnittsweise auf dem wechselbaren Lagerstummel, insbesondere auf der ersten Hülse, auf. D.h., der hohlzylindrische Lagerinnenring korrespondiert hinsichtlich seiner Innenkontur und seines Innendurchmessers vorzugsweise mit der zylindrischen Kontur und dem Außendurchmesser der zylindrischen ersten Hülse des Lagerstummels, so dass das Wälzlager mit seinem Lagerinnenring dort aufliegen und festgelegt werden kann.

Zusätzlich kann ein Keilelement o. dgl. Bauteil vorgesehen sein, welches ein separates Teil darstellt. Das optionale Keilelement kann an der konisch verlaufenden Kontur der Aufnahme und am wechselbaren Lagerstummel sowie am Lagerinnenring des Wälzlagers anliegen und schließt bspw. einen Winkel zwischen 10° und 50°, insbesondere einen Winkel zwischen 20° und 40°, ein.

Bei der bestimmungsgemäßen Montage der hier anhand einer Ausführungsvariante beispielhaft erläuterten Lageranordnung werden der wechselbare Lagerstummel und die Aufnahme über das erste Gewinde bzw. das Außengewinde des Lagerstummels und das hiermit korrespondierende Innengewinde bzw. das zweite Gewinde der Aufnahme gemeinsam montiert. Der erste Gewinde (Außengewinde) und das zweite Gewinde (Innengewinde) sind korrespondierend zueinander ausgebildet und dadurch miteinander verschraubbar. Folglich wird der wechselbare Lagerstummel mittels Drehen und Einschrauben in Gewindedrehrichtung von der Aufnahme aufgenommen und kann dort festgesetzt werden. Dabei wird zum einen der Lagerinnenring axial eingespannt, sofern das Keilelement gleichzeitig schon montiert wurde, und zum anderen wird zwischen dem Keilelement und der konisch verlaufenden Kontur der Aufnahme eine Formschlussverbindung sowie eine Presspassung erzeugt. Der Lagerinnenring des Wälzlagers liegt in der festgesetzten Position des wechselbaren Lagerstummels zumindest abschnittsweise auf diesem auf (auf seiner zylindrischen zweiten Hülse). Zugleich stützt sich das Wälzlager zumindest abschnittsweise auf der Aufnahme und/oder auf dem Achsstummel ab.

In die Innenbohrung des wechselbaren Lagerstummels kann wahlweise ein zusätzliches Schraubelement mit Außengewinde einführbar bzw. einsetzbar sein. Dieses optional zu verstehende Schraubelement kann bspw. durch eine Schraube mit Innensechskantkopf ausgebildet sein. Ein freies Ende mit Außengewinde des Schraubelements nimmt ein konisches Ringelement auf, in dessen zentraler Bohrung sich ein mit dem Außengewinde des Schraubelements korrespondierendes Innengewinde befindet, so dass das konische Ringelement mit dem Schraubelement verschraubt werden kann. Das konische Ringelement kann mittels des Schraubelements in den dritten Abschnitt der Innenbohrung des Lagerstummels hineingetrieben werden, wodurch zwischen dem ersten Gewinde (Außengewinde) des wechselbaren Lagerstummels und dem zweiten Gewinde (Innengewinde) der Aufnahme, insbesondere des Achsstummels, eine Flächenpressung entstehen kann.

Die bevorzugte Wirkung des Ringelements ist die, dass das erste Gewinde (Außengewinde) und das zweite Gewinde (Innengewinde) miteinander verpresst werden können, wodurch eine Art Gewindesicherung erreicht werden kann. Über den dadurch entstandenen Pressverbund werden die auf die Lageranordnung wirkenden Kräfte besser aufgenommen und die Gewinde daran gehindert, sich im Betrieb der Maschine zu lösen. Das Hineintreiben des konischen Ringelements in den konischen Abschnitt des Lagerstummels erfolgt durch eine Rotation des Schraubelements um die eigene Achse bei gleichzeitig nicht drehendem Ringelement. Um diese Funktion zu gewährleisten, ist es wichtig, dass die Durchgangsbohrung im Bereich des zweiten Abschnittes einen zumindest geringfügig größeren Durchmesser aufweist als der Schaft des Schraubelements, und dass dort kein Innengewinde vorhanden ist, so dass das Schraubelement dort einfach in Längsrichtung hindurchgesteckt werden kann. Erst das Anziehen einer in den Kopf oder Sechskantkopf des Schraubelements eingesetzten Schraube kann dann für die Ausübung der Flächenpressung zwischen dem ersten Gewinde (Außengewinde) und dem zweiten Gewinde (Innengewinde) sorgen.

Der Außenring des Wälzlagers kann auf seiner nach außen, d.h. von der ringartigen Aufnahme abgewandten, Stirnseite mehrere Bohrungen mit Innengewinde umfassen, welche bspw. in einem gleichmäßigen Abstand zueinander angeordnet sein können. Korrespondierend zu den Bohrungen des Außenrings des Wälzlagers mit ihren jeweiligen Innengewinden können bspw. zwei Scheiben vorgesehen sein, die jeweils der Stirnseite des Wälzlagers zugeordnet sein können. In diese Bohrungen werden zur Fixierung der erfindungsgemäßen Lageranordnung jeweils Schrauben mit oder ohne Unterlegscheiben eingesetzt. Der Außenring des Wälzlagers kann somit im montierten Zustand der Welle fest mit einem Rahmenelement der landwirtschaftlichen Maschine, insbesondere der Bodenbearbeitungsvorrichtung, verbunden werden.

Nachfolgend wird noch ein weiteres Ausführungsbeispiel der erfindungsgemäßen Lageranordnung beschrieben, das sich in einigen kleineren Details von den zuvor beschriebenen Varianten unterscheiden kann. Wie schon zuvor beschrieben, ist die Welle des landwirtschaftlichen Werkzeugs ist hohl ausgebildet und umfasst einen zumindest näherungsweise runden Querschnitt, ist also zumindest abschnittsweise hohlzylindrisch geformt. An ihren stirnseitigen Enden umfasst die Welle jeweils eine Öffnung, in welche eine Aufnahme eingesetzt ist. Die Aufnahme ist Teil eines Achsstummels mit zumindest einem zweiten Absatz größeren Durchmessers als der Innendurchmesser der Welle. Der zumindest eine zweite Absatz bildet auf diese Weise eine Hinterschneidung mit der Stirnseite der Öffnung der Welle aus. Die Aufnahme umfasst eine innere Ausnehmung, welche derart ausgebildet ist, dass die zentrale Längsbohrung der Aufnahme durch eine konisch verlaufende Kontur bzw. konisch verlaufende Innenkontur und durch ein zweites Gewinde bzw. ein Innengewinde gebildet ist. Die konisch verlaufende Kontur der zentralen Längsbohrung der Aufnahme erstreckt sich zumindest im Bereich bzw. entlang des zumindest einen zweiten Absatzes, und das zweite Gewinde (Innengewinde) erstreckt sich über den Achsstummel und zumindest abschnittsweise über den zumindest einen zweiten Absatz.

In die Aufnahme ist ein wechselbarer Lagerstummel eingesetzt, dessen Außengewinde mit dem Innengewinde der Aufnahme zusammenwirkt bzw. sich im Eingriff befindet. Der wechselbare Lagerstummel umfasst zumindest einen Absatz, welcher zumindest eine Absatz den Kopf des wechselbaren Lagerstummels ausbildet. Der zumindest eine Absatz kann bspw. als Sechskant ausgebildet sein oder eine andere Kontur aufweisen. An den zumindest einen Absatz schließt sich in Längserstreckungsrichtung eine zylindrische erste Hülse und eine zweite Hülse an, wobei die zweite Hülse ein erstes Gewinde, insbesondere ein Außengewinde, ausbildet oder trägt.

Der zumindest eine Absatz, die zylindrische erste Hülse und die das Außengewinde tragende zweite Hülse unterscheiden sich in ihrem Durchmesser, wobei ein Durchmesser des zumindest einen Absatzes größer ist als die Durchmesser der ersten Hülse und der zweiten Hülse, und wobei der Durchmesser der zylindrischen ersten Hülse größer ist als der Durchmesser der das Außengewinde tragenden zweiten Hülse. Ein Übergang zwischen der ersten Hülse und der zweiten Hülse zeichnet sich durch eine in Längserstreckungsrichtung erstreckende konische Schräge aus, welche Schräge korrespondierend zur konisch verlaufenden Kontur der Aufnahme gebildet ist, so dass die Schräge zwischen erster Hülse und zweiter Hülse flächig in der hohlkegelartigen konischen Kontur der Aufnahme zum Liegen kommen kann.

Der wechselbare Lagerstummel, insbesondere die zweite Hülse, steht mit dem ersten Gewinde (Außengewinde) und mit der Schräge der konisch verlaufenen Kontur und mit dem zweiten Gewinde (Innengewinde) der Aufnahme in Oberflächenkontakt bzw. im Eingriff. Der wechselbare Lagestummel umfasst eine durchgehende und zentral angeordnete bzw. verlaufende Innenbohrung. Die zentrale Innenbohrung lässt sich entlang ihrer Längserstreckungsrichtung in drei Abschnitte einteilen. Ein erster Abschnitt erstreckt zumindest bereichsweise über die Breite des zumindest einen Absatzes und kann diesen mit leichtem Spiel aufnehmen. Ein zweiter Abschnitt erstreckt sich zumindest bereichsweise über der Länge der ersten Hülse, ist jedoch im Durchmesser etwas größer als eine nachfolgend beschriebene Schraube, und ein dritter Abschnitt erstreckt sich zumindest bereichsweise über die Länge der ersten Hülse und über die Länge der zweiten Hülse. Im Bereich des ersten Gewindes (Außengewinde) weist der wechselbare Lagerstummel drei, vier oder mehr axiale Schlitze auf.

Der wechselbare Lagerstummel ist dazu ausgebildet, ein Wälzlager zu führen, d.h. das Wälzlager wird vom wechselbaren Lagerstummel zumindest abschnittsweise aufgenommen. Der wechselbare Lagerstummel sorgt für eine Zentrierung und Ausrichtung des Wälzlagers bei der Montage der Lageranordnung. Das Wälzlager erstreckt sich zumindest abschnittsweise sowohl über den ersten Abschnitt als auch über den zweiten Abschnitt des wechselbaren Lagerstummels.

Das Wälzlager umfasst auch in der hier beschriebenen Ausführungsvariante einen Lagerinnenring und einen Außenring. Der nach innen hohlzylindrische Lagerinnenring erstreckt sich zumindest abschnittsweise über die zylindrische erste Hülse des wechselbaren Lagerstummels und ist zur Aufnahme in Längserstreckungsrichtung beabstandet. Der Außenring des Wälzlagers umfasst auf seiner Stirnseite mehrere Bohrungen, welche in einem gleichmäßigen Abstand zueinander angeordnet sind. Der Stirnseite des Wälzlagers sind wahlweise jeweils weitere Scheiben zugeordnet. Zur Fixierung der Lageranordnung sind in die Bohrungen mit Innengewinde jeweils Schrauben mit oder ohne Unterlegscheiben eingeschraubt bzw. einschraubbar.

Bei der bestimmungsgemäßen Montage der Lageranordnung werden der wechselbare Lagerstummel und die Aufnahme über das erste Gewinde (Außengewinde) und das damit korrespondierende zweite Gewinde (Innengewinde) gemeinsam montiert. Das erste Gewinde bzw. Außengewinde und das zweite Gewinde bzw. Innengewinde sind dabei korrespondierend zueinander ausgebildet, weisen also gleiche Steigung und passende Durchmesser auf. Durch Einschrauben des wechselbaren Lagerstummels wird der wechselbare Lagerstummel über das erste Gewinde bzw. sein Außengewinde von der Aufnahme aufgenommen und festgesetzt. In die Innenbohrung des wechselbaren Lagerstummels ist ein Schraubelement mit Außengewinde eingesetzt, wobei das freie Ende des Schraubelements ein mit Innengewinde ausgestattetes konisches Ringelement im dritten Abschnitt der Innenbohrung aufnimmt. Das konische Ringelement wird mittels des Schraubelements in den dritten Abschnitt der Innenbohrung hineingetrieben, wodurch zwischen dem ersten Gewinde (Außengewinde) des wechselbaren Lagerstummels und dem zweiten Gewinde (Innengewinde) der Aufnahme, insbesondere des Achsstummels, eine Flächenpressung entsteht, d.h. es das erste Gewinde und das zweite Gewinde werden miteinander verpresst.

Über den dadurch entstandenen Pressverbund werden die auf die Lageranordnung wirkenden Kräfte besser aufgenommen. Das Hineintreiben des konischen Ringelements erfolgt durch eine Rotation des Schraubelements um die eigene Achse. Das Anziehen einer in das Schraubelement eingesetzte Schraube sorgt für die Ausübung der Flächenpressung zwischen dem ersten Gewinde und dem zweiten Gewinde.

Es sei an dieser Stelle ergänzend erwähnt, dass die Erfindung auch eine landwirtschaftliche Maschine mit mindestens einer rotierenden Walze oder mindestens einem rotierenden landwirtschaftlichen Werkzeug umfasst, wobei die mindestens eine Walze oder das Werkzeug über zwei stirnseitige Lageranordnungen in einem Rahmen der landwirtschaftlichen Maschine drehbar gelagert ist. Es sei betont, dass die Lageranordnungen jeweils gemäß einer der zuvor beschriebenen Ausführungsvarianten ausgebildet sind oder ausgebildet sein können. Wenn also im Zusammenhang der vorliegenden Erfindungsbeschreibung von einer Lageranordnung die Rede ist, so kann dieser Begriff immer auch durch eine landwirtschaftliche Maschine mit einer solchen Lageranordnung ersetzt werden und umgekehrt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Die Fig. 1 zeigt eine Ausführungsvariante einer landwirtschaftlichen Bodenbearbeitungsvorrichtung.

Die Fig. 2 zeigt eine rotierende Welle eines Bodenbearbeitungsgeräts oder Bodenbearbeitungswerkzeuges, das Teil der Bodenbearbeitungsvorrichtung gemäß Fig. 1 sein kann.

Die Figuren 3A, 3B und 3C zeigen Ausführungsvarianten einer erfindungsgemäßen Lageranordnung zur Lagerung der Welle gemäß Fig. 2 in verschiedenen Ansichten und Perspektiven.

Die Figuren 4A, 4B und 4C zeigen Bestandteile der erfindungsgemäßen Lageranordnung gemäß Fig. 3 in perspektivischen Ansichten.

Fig. 5 zeigt in einem einen Teillängsschnitt die zusammengebaute Lageranordnung in einem weiteren Ausführungsbeispiel mit ihren verschiedenen zusammenwirkenden Einzelheiten.

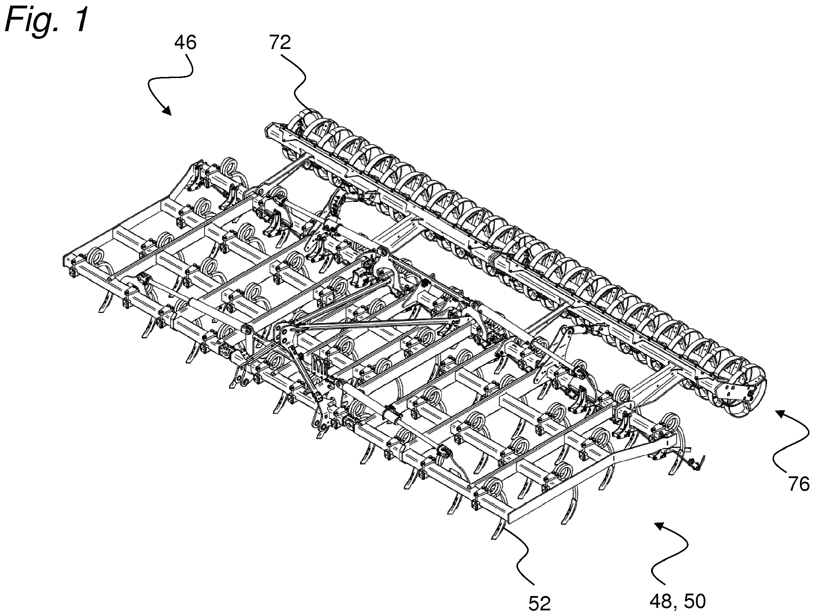

Für gleiche oder gleich wirkende Elemente der Erfindung verwenden die Figuren 1 bis 5 jeweils identische Bezugsziffern. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

Die schematische Perspektivansicht der Fig. 1 zeigt eine Ausführungsvariante einer landwirtschaftlichen Bodenbearbeitungsvorrichtung 46 zur Verdeutlichung einer sinnvollen Einsatzmöglichkeit für eine nachfolgend näher beschriebene Lageranordnung. Die in Fig. 1 beispielhaft gezeigte Bodenbearbeitungsvorrichtung 46 wird typischerweise von einer Zugmaschine (hier nicht dargestellt) gezogen. Wenn im vorliegenden Zusammenhang von einer Bodenbearbeitungsvorrichtung 46 oder von einer landwirtschaftlichen Bodenbearbeitungsvorrichtung 46 die Rede ist, so kann diese wahlweise auch als Bodenbearbeitungsmaschine 46 bzw. als landwirtschaftliche Bodenbearbeitungsmaschine 46 bezeichnet werden. Die verwendeten Begriffe sind insofern als synonym zu verstehen. Diese Klarstellung soll auch für die obigen Beschreibungspassagen gelten.

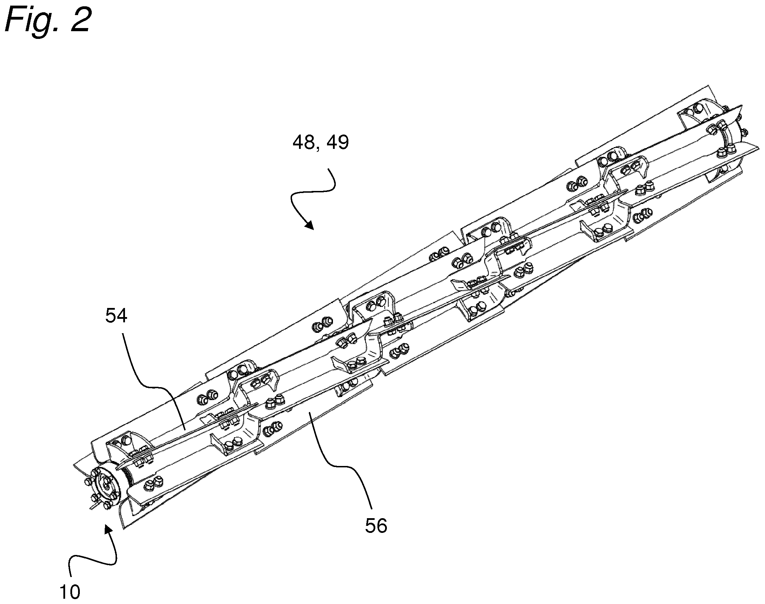

Die beispielhaft gezeigte Bodenbearbeitungsvorrichtung 46 umfasst in mehreren Reihen eine Vielzahl von Bodenbearbeitungswerkzeugen 48. Gemäß der Fig. 1 umfasst die Bodenbearbeitungsvorrichtung 46 vier hintereinander angeordnete Reihen 50 mit jeweils zueinander beabstandeten Federzinken 52. Die Federzinken 52 sorgen für eine Lockerung des Bodens, wenn sie diesen furchend bearbeiten. Den vier Reihen mit Federzinken 52 ist ein sich über die gesamte Arbeitsbreite der Vorrichtung 46 erstreckendes rotierendes Walzenwerkzeug 76 nachgeordnet. Das Walzenwerkzeug 76 umfasst eine um eine im Wesentlichen horizontale Achse drehende Welle 54 (vgl. Fig. 2) mit daran befestigten Federelementen 72, die in ihrer Gesamtheit eine annähernd zylindrische Außenkontor des Walzenwerkzeuges 76 ausbilden. Die Federelemente 72 dienen vorrangig dem Zerkleinern der beim Einsatz der Federzinken 52 aufgeworfenen Erde, einer Einebnung und/oder einer abschließenden (Teil-)Verdichtung des Bodens, um den Boden bspw. für eine nachfolgende Aussaat vorzubereiten. Die rotierende Welle 54 umfasst zu ihrer Aufhängung und Lagerung an einem Rahmen der Bodenbearbeitungsvorrichtung 46 jeweils an ihren Enden eine Lageranordnung 10 (in Fig. 1 nicht dargestellt; vgl. hierzu etwa Fig. 2 am Beispiel einer Messerwalze).

Die schematische Perspektivansicht der Fig. 2 zeigt eine Ausführungsvariante des bereits in Fig. 1 schematisch angedeuteten rotierenden Bodenbearbeitungswerkzeugs 48 in Form einer rotierenden Messerwalze 49. Die rotatorisch gelagerte Messerwalze 49 umfasst eine um eine im Wesentlichen horizontale Achse drehende Welle 54. Entlang des Umfangverlaufes und über die Breite bzw. entlang der Längsachse der Welle 54 sind auf dieser zahlreiche Messer 56 angeordnet. Die Messer 56 sind entlang der Längserstreckungsrichtung der Welle 54 schräg angeordnet. Die Messer 56 sind mittels geeigneter Befestigungsmittel, bspw. in Form von Schraubelementen, lösbar an die Welle 54 fixiert, so dass die Flachseiten der Messer 56 in etwa senkrecht zum Außenumfang der Welle 54 ausgerichtet sind. An den stirnseitigen Enden der Welle 54 ist jeweils eine Lageranordnung 10 vorgesehen. Über die Lageranordnung 10 kann die Welle 54 an einem Rahmen der Bodenbearbeitungsvorrichtung 46 gelagert werden. Dieser Rahmen kann wahlweise schwenkbar oder höhenverstellbar ausgebildet sein, kann jedoch wahlweise auch starr bzw. ein Teil eines Tragrahmens der Bodenbearbeitungsvorrichtung 46 sein.

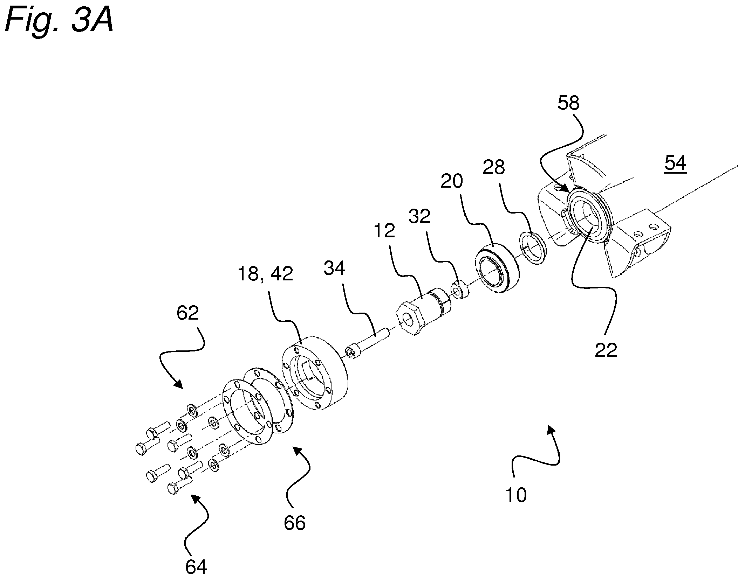

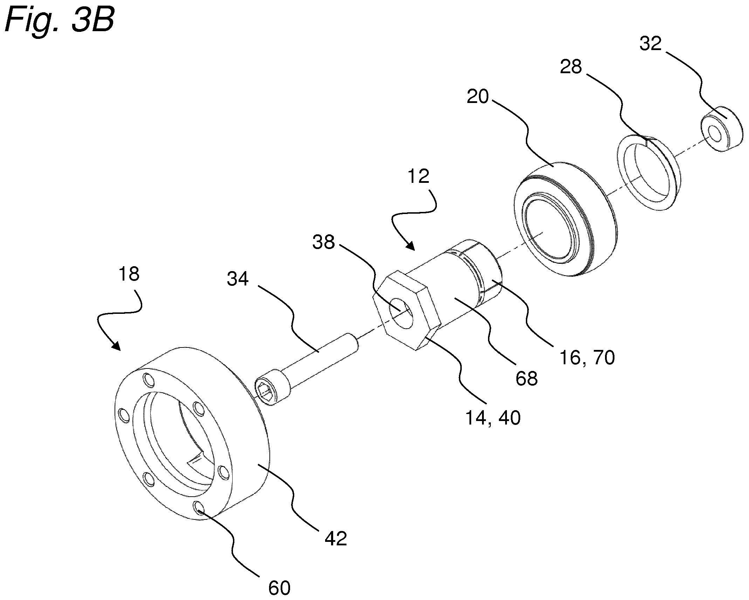

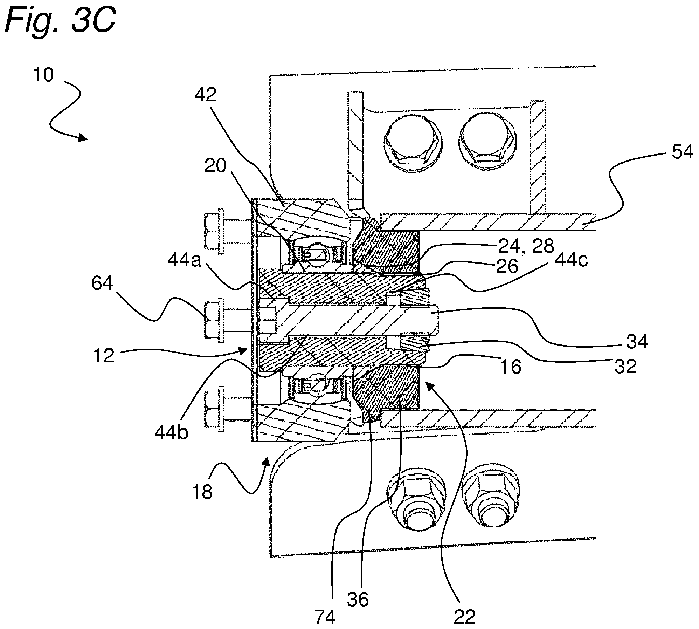

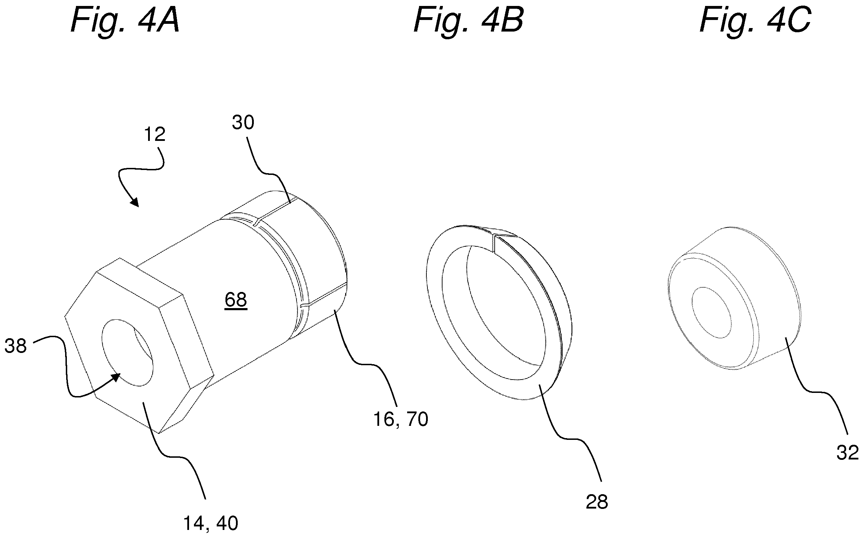

Die Figuren 3A, 3B und 3C zeigen eine Ausführungsvariante der erfindungsgemäßen Lageranordnung 10 in jeweils unterschiedlichen Perspektiven und Ansichten, und die Figuren 4A, 4B und 4C zeigen einzelne Elemente der erfindungsgemäßen Lageranordnung 10 in jeweils einer perspektivischen Detailansicht. Die rotierend gelagerte Welle 54 der gezeigten Variante des Walzenwerkzeugs 76 ist hohl ausgebildet und umfasst jeweils an ihren stirnseitigen Enden bzw. an ihren Stirnseiten eine Öffnung 58. In die in Fig. 3A gezeigte stirnseitige Öffnung 58 an einer der beiden Stirnseiten der Welle 54 ist eine ringartige Aufnahme 22 eingesetzt. Die ringartige Aufnahme 22 bildet einen Teil eines Achsstummels 36 mit einem Absatz 74, der hier zur Unterscheidung von einem weiteren Absatz als zweiter Absatz 74 bezeichnet werden soll. Der zumindest eine zweite Absatz 74 bildet eine Hinterschneidung für die Stirnseite der Welle 54 aus.

Wie es lediglich der schematisch zu verstehende Längsschnitt der Fig. 3C erkennen lässt, ist die Aufnahme 22 durch einen Ring gebildet bzw. weist eine ringförmige Kontur auf, dessen/deren annähernd zylindrische Außenmantelfläche in einen korrespondierenden Innenmantel der hohlen Welle 54 an deren Stirnseite eingesetzt ist. Um die ringförmige Aufnahme 22 dort einzusetzen und festzulegen, kann sie bspw. mittels Pressverbindung mit der Welle 54 verbunden werden. Die zur Welle 54 weisende innere Stirnseite der Aufnahme 22 weist keine besondere Funktion auf und soll hier nicht weiter beschrieben werden. Da die Aufnahme 22 jedoch weitere Bauteile trägt bzw. als Fixierung für weitere Funktionsteile dienen soll, weist sie weitere Funktionsflächen auf. So weist die ringförmige Aufnahme an ihrer zur stirnseitigen Außenseite der Welle 54 weisenden Stirn- bzw. Flachseite eine konisch verlaufende Kontur 24 und ein zweites Gewinde 26 auf, die gleichzeitig die sich aneinander anschließenden Funktionsflächen einer in Längsrichtung verlaufenden inneren durchgehende Ausnehmung der Aufnahme 22 bilden. Die zur äußeren Stirnseite weisende konisch verlaufende Kontur 24 weist eine hohlkegelartige Kontur auf, die sich nach außen zur Stirnseite der Aufnahme 22 hin aufweitet und sich nach innen hin verjüngt. Nach innen setzt sich die sich verjüngende hohlkegelartige Kontur der konisch verlaufenden Kontur 24 im Innengewinde 26 fort, das hier auch als zweites Gewinde 26 bezeichnet ist. Das Innengewinde 26 ist ein Durchgangsgewinde, das sich von der konisch verlaufenden Kontur 24 bis zur gegenüberliegenden Stirn- bzw. Flachseite der Aufnahme 22 erstreckt; damit ist die zur anderen Stirnseite der Welle 54 weisende innere Flach- bzw. Stirnseite der Aufnahme 22 gemeint.

Damit die ringförmige Aufnahme 22 in definierter Position an der Stirnseite der Welle 54 festlegbar ist, weist die Aufnahme 22 an ihrem Außenumfang zumindest zwei sich in ihrer Längsrichtung aneinander anschließende Funktionsflächen auf. Dies ist zum einen die zylindrische Außenmantelfläche, die mit der Innenmantelfläche der Welle 54 korrespondiert, bspw. zur Ausbildung einer Presspassung. An diese zylindrische Außenmantelfläche schließt sich in Richtung zur äußeren Flach- bzw. Stirnseite der Aufnahme 22 der schon erwähnte Absatz 74 bzw. zweite Absatz 74 an, der bspw. durch einen Ringabschnitt größeren Durchmessers als der in der Innenmantelfläche der Welle 54 eingesetzte zylindrische Abschnitt der Aufnahme 22 gebildet sein kann. Der zweite Absatz 74 kann bspw. an seiner zur Stirnseite der Welle 54 weisenden Rückseite konisch abgeschrägt sein, wie dies der schematische Längsschnitt der Fig. 3C erkennen lässt.

Dieser Längsschnitt der Fig. 3C lässt zudem erkennen, dass die Aufnahme 22 sich zumindest im Bereich des zumindest einen zweiten Absatzes 74 und das zweite Gewinde 26 bzw. das zweite Innengewinde 26 über den Achsstummel 36 und zumindest abschnittsweise über den zumindest einen zweiten Absatz 74 erstreckt. Dies kann auch dadurch ausgedrückt werden, dass der Achsstummel 36 im Wesentlichen durch die Aufnahme 22 gebildet ist, deren vier Funktionsabschnitte außen durch den zylindrischen äußeren Mantel, den demgegenüber verdickten zweiten Absatz 74 und innen bzw. an der inneren Durchgangsöffnung durch den hohlkegelartigen Abschnitt bzw. die konisch verlaufende Kontur 24 und das sich anschließend fortsetzende Innengewinde 26 (zweites Gewinde 26) gebildet sind. Der Achsstummel 36, gebildet durch die Aufnahme 22, verbleibt normalerweise an der Welle 54, auch wenn nachfolgend näher beschriebene Verschleißteile wie insbesondere ein im Gebrauch verschleißendes Wälzlager 18 ausgewechselt werden müssen.

Die Lageranordnung 10 umfasst einen wechselbaren Lagerstummel 12, der in den Figuren 3A, 3B und 3C jeweils verdeutlicht ist, und der in die Aufnahme 22 einsetzbar ist (vgl. Fig. 3C). Der stiftartige und wechselbare Lagerstummel 12 umfasst zumindest an einer Stirnseite einen dem Lagerstummel 12 zugeordneten Absatz 14. Der zumindest eine Absatz 14 bildet den sogenannten Kopf des wechselbaren Lagerstummels 12 aus und ist im gezeigten Ausführungsbeispiel als Sechskant gebildet. In Längserstreckungsrichtung des bspw. zylindrisch geformten wechselbaren Lagerstummels 12 schließt sich eine erste Hülse 68 und eine zweite Hülse 70 an (vgl. Fig. 4A). Die zweite Hülse 70 bildet ein erstes Gewinde 16 aus. Bei dem ersten Gewinde 16 handelt es sich vorzugsweise um ein Außengewinde, wie dies durch die Fig. 4A angedeutet und auch im Längsschnitt der Fig. 3C erkennbar ist. Der zumindest eine Absatz 14, die erste Hülse 68 und die zweite Hülse 70 unterscheiden sich durch ihre jeweiligen Durchmesser, wobei ein Durchmesser des zumindest einen Absatzes 14 größer ist als die Durchmesser der ersten Hülse 68 und der bspw. das Außengewinde 16 ausbildenden zweiten Hülse 70, und wobei der Durchmesser der ersten Hülse 68 größer ist als der Durchmesser der zweiten Hülse 70.

Der wechselbare Lagerstummel 12 umfasst weiterhin eine in Längserstreckungsrichtung durchgehende und zentral angeordnete Innenbohrung 38 (vgl. Fig. 3B, Fig. 3C), welche zylindrisch und zumindest bereichsweise konisch ausgebildet ist. Die Innenbohrung 38 lässt sich entlang ihrer Längserstreckungsrichtung in drei Abschnitte einteilen, wie dies lediglich im schematischen Längsschnitt der Fig. 3C erkennbar ist. Ein zur stirnseitigen Außenseite der Welle 54 weisender erster Abschnitt 44a der Innenbohrung 38 erstreckt sich zumindest bereichsweise über die Breite des zumindest einen Absatzes 14 an der Außenseite des Lagerstummels 12. Ein sich in Längserstreckungsrichtung der Innenbohrung 38 daran anschließender zweiter Abschnitt 44b mit gegenüber dem ersten Abschnitt 44a reduziertem Innendurchmesser erstreckt sich zumindest bereichsweise über die Länge der ersten Hülse 68. Ein gegenüber dem Innendurchmesser des zweiten Abschnittes 44b aufgeweiteter dritter Abschnitt 44c erstreckt sich zumindest bereichsweise über die Länge der ersten Hülse 68 und zumindest bereichsweise über die Länge der zweiten Hülse 70. Der dritte Abschnitt 44c bildet einen sich in Richtung zur Stirnseite des Lagerstummels 12, die der am Absatz 14 liegenden Stirnseite gegenüber liegt, aufweitenden Innenkonus aus. Im Bereich des ersten Gewindes 16 bzw. des Außengewindes 16 weist der wechselbare Lagerstummel 12 vier axiale Schlitze 30 auf, die in Fig. 4A deutlich erkennbar sind.

Der wechselbare Lagerstummel 12 ist dafür vorgesehen und dazu ausgebildet, ein Wälzlager 18 zu führen, d.h. das Wälzlager 18 wird vom wechselbaren Lagerstummel 12 zumindest abschnittsweise aufgenommen, und der wechselbare Lagerstummel 12 sorgt dabei für eine Zentrierung und Ausrichtung des Wälzlagers 18, wie dies im Längsschnitt der Fig. 3C erkennbar ist. Ein Lagerinnenring 20 des Wälzlagers 18 liegt dabei an der Rückseite des zumindest einen Absatzes 14 des wechselbaren Lagerstummels 12 bündig an. Zugleich liegt der Lagerinnenring 20 zumindest abschnittsweise auf dem wechselbaren Lagerstummel 12, insbesondere auf der ersten Hülse 68, auf. D.h., der hohlzylindrische Lagerinnenring 20 korrespondiert hinsichtlich seiner Innenkontur und seines Innendurchmessers mit der zylindrischen Kontur und dem Außendurchmesser der zylindrischen ersten Hülse 68 des Lagerstummels 12, so dass das Wälzlager 18 mit seinem Lagerinnenring 20 dort aufliegen und festgelegt werden kann (vgl. Fig. 3C).

Zusätzlich ist ein Keilelement 28 vorgesehen, welches ein separates Teil darstellt und das in den Figuren 3C und 4B erkennbar ist. Das Keilelement 28 liegt an der konisch verlaufenden Kontur 24 der Aufnahme 22 und am wechselbaren Lagerstummel 12 sowie am Lagerinnenring 20 des Wälzlagers 18 an und schließt einen Winkel zwischen 10° und 50°, vorzugsweise jedoch einen Winkel zwischen 20° und 40°, ein.

Bei der Montage der Lageranordnung 10 werden der wechselbare Lagerstummel 12 und die Aufnahme 22 über das erste Gewinde 16 bzw. das Außengewinde 16 des Lagerstummels 12 und das hiermit korrespondierende Innengewinde 26 bzw. das zweite Gewinde 26 der Aufnahme 22 gemeinsam montiert. Der erste Gewinde 16 (Außengewinde) und das zweite Gewinde 26 (Innengewinde) sind korrespondierend zueinander ausgebildet und dadurch miteinander verschraubbar. Folglich wird der wechselbare Lagerstummel 12 mittels Drehen und Einschrauben in Gewindedrehrichtung von der Aufnahme 22 aufgenommen und kann dort festgesetzt werden (vgl. Fig. 3C). Dabei wird zum einen der Lagerinnenring 20 axial eingespannt, sofern das Keilelement 28 gleichzeitig schon montiert wurde, und zum anderen wird zwischen dem Keilelement 28 und der konisch verlaufenden Kontur 24 der Aufnahme 22 eine Formschlussverbindung sowie eine Presspassung erzeugt. Der Lagerinnenring 20 des Wälzlagers 18 liegt in der festgesetzten Position des wechselbaren Lagerstummels 12 zumindest abschnittsweise auf diesem auf (auf seiner zylindrischen zweiten Hülse 70). Zugleich stützt sich das Wälzlager 18 zumindest abschnittsweise auf der Aufnahme 22 und/oder auf dem Achsstummel 36 ab.

In die Innenbohrung 38 des wechselbaren Lagerstummels 12 ist ein zusätzliches Schraubelement 34 mit Außengewinde (vgl. Fig. 3B) einführbar. Das Schraubelement 34 kann bspw. durch eine Schraube mit Innensechskantkopf ausgebildet sein. Ein freies Ende mit Außengewinde des Schraubelements 34 nimmt ein konisches Ringelement 32 auf (vgl. Fig. 3B, Fig. 3C), in dessen zentraler Bohrung sich ein mit dem Außengewinde des Schraubelements 34 korrespondierendes Innengewinde befindet, so dass das konische Ringelement 32 mit dem Schraubelement 34 verschraubt werden kann. Das konische Ringelement 32 kann mittels des Schraubelements 34 in den dritten Abschnitt 44c der Innenbohrung 38 des Lagerstummels 12 hineingetrieben werden, wodurch zwischen dem ersten Gewinde 16 (Außengewinde) des wechselbaren Lagerstummels 12 und dem zweiten Gewinde 26 (Innengewinde) der Aufnahme 22, insbesondere des Achsstummels 36, eine Flächenpressung entsteht, was in der Fig. 3C erkennbar ist, die den montierten Zustand der Teile und ihre Lage zueinander verdeutlicht.

Die Wirkung des Ringelements 32 ist die, dass das erste Gewinde 16 (Außengewinde) und das zweite Gewinde 26 (Innengewinde) miteinander verpresst werden, wodurch eine Art Gewindesicherung erreicht werden soll. Über den dadurch entstandenen Pressverbund werden die auf die Lageranordnung 10 wirkenden Kräfte besser aufgenommen und die Gewinde 16 und 26 daran gehindert, sich im Betrieb der Maschine zu lösen. Das Hineintreiben des konischen Ringelements 32 in den konischen Abschnitt 44c des Lagerstummels 12 erfolgt durch eine Rotation des Schraubelements 34 um die eigene Achse bei gleichzeitig nicht drehendem Ringelement 32. Um diese Funktion zu gewährleisten ist es wichtig, dass die Durchgangsbohrung 38 im Bereich des zweiten Abschnittes 44b einen zumindest geringfügig größeren Durchmesser aufweist als der Schaft des Schraubelements 34, und dass dort kein Innengewinde vorhanden ist, so dass das Schraubelement 34 dort einfach in Längsrichtung hindurchgesteckt werden kann.

Erst das Anziehen einer in den Kopf oder Sechskantkopf des Schraubelements 34 eingesetzten Schraube 64 (vgl. Fig. 3C) sorgt für die Ausübung der Flächenpressung zwischen dem ersten Gewinde 16 (Außengewinde) und dem zweiten Gewinde 26 (Innengewinde).

Der Außenring 42 des Wälzlagers 18 umfasst auf seiner nach außen, d.h. von der ringartigen Aufnahme 22 abgewandten, Stirnseite insgesamt sechs Bohrungen 60, welche in einem gleichmäßigen Abstand zueinander angeordnet sind (vgl. Fig. 3A, Fig. 3B). Korrespondierend zu den Bohrungen 60 des Außenrings 42 des Wälzlagers 18 sind zwei Scheiben 66 vorgesehen, die jeweils der Stirnseite des Wälzlagers 18 zugeordnet sind. In diese Bohrungen 60 werden zur Fixierung der erfindungsgemäßen Lageranordnung 10 jeweils Schrauben 64 mit Unterlegscheiben 62 eingesetzt (Fig. 3A). Der Außenring 42 des Wälzlagers 18 ist im montierten Zustand der Welle 54 fest mit einem Rahmenelement der landwirtschaftlichen Maschine, insbesondere der Bodenbearbeitungsvorrichtung 46, verbunden, was jedoch in den Figuren 3A und 3C nicht erkennbar ist; dort sind lediglich die in die Bohrungen 60 eingesetzten Schrauben 64 mit Unterlegscheiben 62 und darunter liegenden Scheiben 66 erkennbar.

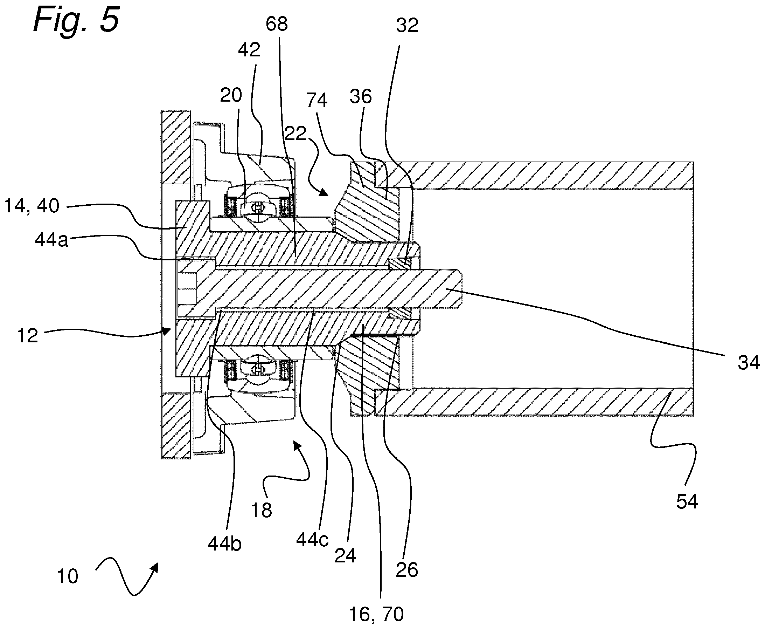

Der schematische Längsschnitt der Fig. 5 zeigt ein weiteres Ausführungsbeispiel der erfindungsgemäßen Lageranordnung 10. Die Welle 54 eines landwirtschaftlichen Werkzeugs ist hohl ausgebildet und umfasst einen zumindest näherungsweise runden Querschnitt, ist also zumindest abschnittsweise hohlzylindrisch geformt. An ihren stirnseitigen Enden umfasst die Welle 54 jeweils eine Öffnung 58, in welche eine Aufnahme 22 eingesetzt ist. Die Aufnahme 22 ist Teil eines Achsstummels 36 mit zumindest einem zweiten Absatz 74 größeren Durchmessers als der Innendurchmesser der Welle 54. Der zumindest eine zweite Absatz 74 bildet auf diese Weise eine Hinterschneidung mit der Stirnseite der Öffnung 58 der Welle 54 aus. Die Aufnahme 22 umfasst eine innere Ausnehmung, welche derart ausgebildet ist, dass die zentrale Längsbohrung der Aufnahme 22 durch eine konisch verlaufende Kontur 24 bzw. konisch verlaufende Innenkontur 24 und durch ein zweites Gewinde 26 bzw. ein Innengewinde 26 gebildet ist. Die konisch verlaufende Kontur 24 der zentralen Längsbohrung der Aufnahme 22 erstreckt sich zumindest im Bereich bzw. entlang des zumindest einen zweiten Absatzes 74, und das zweite Gewinde 26 (Innengewinde) erstreckt sich über den Achsstummel 36 und zumindest abschnittsweise über den zumindest einen zweiten Absatz 74.

In die Aufnahme 22 ist ein wechselbarer Lagerstummel 12 eingesetzt, dessen Außengewinde mit dem Innengewinde 26 der Aufnahme 22 zusammenwirkt bzw. sich im Eingriff befindet. Der wechselbare Lagerstummel 12 umfasst zumindest einen Absatz 14, welcher zumindest eine Absatz 14 den Kopf des wechselbaren Lagerstummels 12 ausbildet (vgl. Fig. 5). Der zumindest eine Absatz 14 kann bspw. als Sechskant gebildet sein oder eine andere Kontur aufweisen. An den zumindest einen Absatz 14 schließt sich in Längserstreckungsrichtung eine zylindrische erste Hülse 68 und eine zweite Hülse 70 an, wobei die zweite Hülse 70 ein erstes Gewinde 16, insbesondere ein Außengewinde, ausbildet.

Der zumindest eine Absatz 14, die zylindrische erste Hülse 68 und die das Außengewinde 16 tragende zweite Hülse 70 unterscheiden sich in ihrem Durchmesser, wobei ein Durchmesser des zumindest einen Absatzes 14 größer ist als die Durchmesser der ersten Hülse 68 und der zweiten Hülse 70, und wobei der Durchmesser der zylindrischen ersten Hülse 68 größer ist als der Durchmesser der das Außengewinde 16 tragenden zweiten Hülse 70. Ein Übergang zwischen der ersten Hülse 68 und der zweiten Hülse 70 zeichnet sich durch eine in Längserstreckungsrichtung erstreckende konische Schräge aus, welche Schräge korrespondierend zur konisch verlaufenden Kontur 24 der Aufnahme 22 gebildet ist, so dass die Schräge zwischen erster Hülse 68 und zweiter Hülse 70 flächig in der hohlkegelartigen konischen Kontur 24 der Aufnahme zum Liegen kommen kann.

Der wechselbare Lagerstummel 12, insbesondere die zweite Hülse 70, steht mit dem ersten Gewinde 16 (Außengewinde) und mit der Schräge der konisch verlaufenen Kontur 24 und mit dem zweiten Gewinde 26 (Innengewinde) der Aufnahme 22 in Oberflächenkontakt bzw. im Eingriff. Der wechselbare Lagestummel 12 umfasst eine durchgehende und zentral angeordnete bzw. verlaufende Innenbohrung 38. Die zentrale Innenbohrung 38 lässt sich entlang ihrer Längserstreckungsrichtung in drei Abschnitte einteilen. Ein erster Abschnitt 44a erstreckt zumindest bereichsweise über die Breite des zumindest einen Absatzes 14 und kann diesen mit leichtem Spiel aufnehmen. Ein zweiter Abschnitt 44b erstreckt sich zumindest bereichsweise über der Länge der ersten Hülse 68, ist jedoch im Durchmesser etwas größer als eine nachfolgend beschriebene Schraube 34, und ein dritter Abschnitt 44c erstreckt sich zumindest bereichsweise über die Länge der ersten Hülse 68 und über die Länge der zweiten Hülse 70. Im Bereich des ersten Gewindes 16 (Außengewinde) weist der wechselbare Lagerstummel 12 vier axiale Schlitze 30 auf, wie dies schon in Fig. 4A gezeigt wurde.

Der wechselbare Lagerstummel 12 ist dazu ausgebildet, ein Wälzlager 18 zu führen, d.h. das Wälzlager 18 wird vom wechselbaren Lagerstummel 12 zumindest abschnittsweise aufgenommen. Der wechselbare Lagerstummel 12 sorgt für eine Zentrierung und Ausrichtung des Wälzlagers 18 bei der Montage der Lageranordnung 10. Das Wälzlager 18 erstreckt sich gemäß der Fig. 5 zumindest abschnittsweise sowohl über den ersten Abschnitt 44a als auch über den zweiten Abschnitt 44b des wechselbaren Lagerstummels 12.

Das Wälzlager 18 umfasst auch in der in Fig. 5 gezeigten Ausführungsvariante einen Lagerinnenring 20 und einen Außenring 42. Der nach innen hohlzylindrische Lagerinnenring 20 erstreckt sich zumindest abschnittsweise über die zylindrische erste Hülse 68 des wechselbaren Lagerstummels 12 und ist zur Aufnahme 22 in Längserstreckungsrichtung beabstandet. Der Außenring des Wälzlagers 18 umfasst auf seiner Stirnseite sechs Bohrungen 60 (hier nicht dargestellt), welche in einem gleichmäßigen Abstand zueinander angeordnet sind; die Ausgestaltung kann der in den Figuren 3 und 4 gezeigten ersten Variante entsprechen. Der Stirnseite des Wälzlagers 18 sind jeweils weitere Scheiben 66 zugeordnet. Zur Fixierung der Lageranordnung 10 sind in die Bohrungen 60 jeweils Schrauben 66 mit Unterlegscheiben 62 vorgesehen (hier nicht dargestellt, aber vergleichbar zur ersten Variante gemäß Fig. 3A bis Fig. 4C).

Bei der bestimmungsgemäßen Montage der Lageranordnung 10 werden der wechselbare Lagerstummel 12 und die Aufnahme 22 über das erste Gewinde 16 (Außengewinde) und das damit korrespondierende zweite Gewinde 26 (Innengewinde) gemeinsam montiert. Das erste Gewinde 16 bzw. Außengewinde und das zweite Gewinde 26 bzw. Innengewinde sind dabei korrespondierend zueinander ausgebildet, weisen also gleiche Steigung und passende Durchmesser auf. Durch Einschrauben des wechselbaren Lagerstummels 12 wird der wechselbare Lagerstummel 12 über das erste Gewinde 16 bzw. sein Außengewinde von der Aufnahme 22 aufgenommen und festgesetzt. In die Innenbohrung 38 des wechselbaren Lagerstummels 12 ist ein Schraubelement 34 mit Außengewinde eingesetzt, wobei das freie Ende des Schraubelements ein mit Innengewinde ausgestattetes konisches Ringelement 32 im dritten Abschnitt 44c der Innenbohrung 38 aufnimmt. Das konische Ringelement 32 wird mittels des Schraubelements 34 in den dritten Abschnitt 44c der Innenbohrung 38 hineingetrieben, wodurch zwischen dem ersten Gewinde 16 (Außengewinde) des wechselbaren Lagerstummels 12 und dem zweiten Gewinde 26 (Innengewinde) der Aufnahme 22, insbesondere des Achsstummels 36, eine Flächenpressung entsteht, d.h. es das erste Gewinde 16 und das zweite Gewinde 26 werden miteinander verpresst.

Über den dadurch entstandenen Pressverbund werden die auf die Lageranordnung 10 wirkenden Kräfte besser aufgenommen. Das Hineintreiben des konischen Ringelements 32 erfolgt durch eine Rotation des Schraubelements 34 um die eigene Achse. Das Anziehen einer in das Schraubelement 34 eingesetzte Schraube 64 sorgt für die Ausübung der Flächenpressung zwischen dem ersten erste Gewinde 16 und dem zweite Gewinde 26.

### Bezugszeichenliste

- 10: Lageranordnung
- 12: Lagerstummel
- 14: Absatz (des Lagerstummels)
- 16: erstes Gewinde, Außengewinde
- 18: Wälzlager
- 20: Lagerinnenring
- 22: Aufnahme, ringartige Aufnahme
- 24: Kontur, konisch verlaufende Kontor, hohlkegelartige Kontur
- 26: zweites Gewinde, Innengewinde (der Aufnahme)
- 28: Keilelement
- 30: Schlitz
- 32: Ringelement, konisches Ringelement
- 34: Schraubelement
- 36: Achsstummel
- 38: Innenbohrung, Durchgangsbohrung
- 40: Schraubfläche
- 42: Außenring
- 44a: erster Abschnitt
- 44b: zweiter Abschnitt
- 44c: dritter Abschnitt
- 46: Bodenbearbeitungsvorrichtung, landwirtschaftliche Bodenbearbeitungsvorrichtung, Bodenbearbeitungsmaschine, landwirtschaftliche Bodenbearbeitungsmaschine, Vorrichtung
- 48: Bodenbearbeitungswerkzeug, rotierendes Bodenbearbeitungswerkzeug
- 49: Messerwalze, rotierende Messerwalze
- 50: Reihen mit Federzinken
- 52: Federzinken
- 54: Welle
- 56: Messer
- 58: Öffnung, stirnseitige Öffnung (der Welle)
- 60: Bohrung
- 62: Unterlegscheiben
- 64: Schraube
- 66: Scheiben
- 68: erste Hülse
- 70: zweite Hülse
- 72: Federelement
- 74: zweiter Absatz
- 76: Walzenwerkzeug, rotierendes Walzenwerkzeug, rotierende Walze

## Patentansprüche

1. Lageranordnung (10) einer landwirtschaftlichen Maschine (46) zur drehbaren Lagerung von rotierenden landwirtschaftlichen Werkzeugen, Walzen oder dergl., umfassend zumindest:
- einen dem rotierenden landwirtschaftlichen Werkzeug (48) oder der rotierenden Walze (49, 76) zuordenbaren und dort stirnseitig befestigbaren wechselbaren Lagerstummel (12) mit zumindest einem dem Lagerstummel zugeordneten Absatz (14) und einem ersten Gewinde (16),
- ein vom Lagerstummel (12) geführtes Wälzlager (18), dessen Innenring (20) im montierten Zustand am Absatz (14) des Lagerstummels (12) anliegt,
- eine Aufnahme (22) mit konisch verlaufender Kontur (24) und daran anschließendem zweiten Gewinde (26),
- ein Keilelement (28), welches an der konisch verlaufenden Kontur (24) der Aufnahme (22) anliegt,
wobei der Lagerstummel (12) und die Aufnahme (22) über das erste und zweite Gewinde (16, 26) gemeinsam montiert werden und somit zum einen der Lagerinnenring (20) axial eingespannt wird und zum anderen zwischen dem Keilelement (28) und der sich konisch verlaufenden Kontur (24) der Aufnahme (22) eine Formschlussverbindung sowie eine Presspassung erzeugt wird.

2. Lageranordnung nach Anspruch 1, bei der das Keilelement (28) als separates Teil ausgeführt ist.

3. Lageranordnung nach Anspruch 1, bei der das Keilelement (28) in den Lagerstummel (12) integriert und/oder baulich mit dem Lagerstummel (12) vereint ist.

4. Lageranordnung nach einem der Ansprüche 1 bis 3, bei welcher der Lagerstummel (12) im Bereich des Gewindes (16) zumindest einen axial verlaufenden Schlitz (30) aufweist.

5. Lageranordnung nach einem der Ansprüche 1 bis 4, bei welcher der Lagerstummel (12) auf der dem Gewinde gegenüberliegenden Seite einen weiteren Konus aufweist, in welchen ein konisches Ringelement (32) eingreifen kann, wobei dieses wiederum mittels eines Schraubelements (34) in den weiteren Konus hineingetrieben wird, wodurch zwischen dem ersten Gewinde (16) des Lagerstummels (12) und dem zweiten Gewinde (26) des Achsstummels (36) eine Flächenpressung entsteht.

6. Lageranordnung nach Anspruch 5, bei der das Schraubelement (34) durch eine Innenbohrung (38) des Lagerstummels (12) durch diesen hindurchgeführt wird.

7. Lageranordnung nach einem der Ansprüche 1 bis 6, bei der das Keilelement (28) einen Winkel aufweist, welcher zwischen 10° und 50°, insbesondere jedoch zwischen 20° und 40°, liegt.

8. Lageranordnung nach einem der Ansprüche 1 bis 7, bei welcher der Lagerstummel (12) eine Schraubfläche (40) aufweist.

9. Lageranordnung nach einem der Ansprüche 1 bis 8, bei welcher der Außenring (42) des Wälzlagers (18) fest mit einem Rahmenelement der landwirtschaftlichen Maschine verbunden ist.

10. Landwirtschaftliche Maschine (46) mit mindestens einer rotierenden Walze oder mindestens einem rotierenden landwirtschaftlichen Werkzeug, wobei die Walze (49, 76) oder das Werkzeug über zwei stirnseitige Lageranordnungen (10) in einem Rahmen der landwirtschaftlichen Maschine (46) drehbar gelagert ist, und wobei die Lageranordnungen (10) jeweils gemäß einem der Ansprüche 1 bis 9 ausgebildet sind.

## Claims

1. A bearing arrangement (10) of an agricultural machine (46) for rotating agricultural implements, rollers, or the like, to be borne in a rotatable manner, the bearing arrangement (10) comprising at least:
- one exchangeable bearing stub (12) with at least one shoulder (14) assigned to the bearing stub and with a first thread (16), the bearing stub (12) being assignable to the rotating agricultural implement (48) or to the rotating roller (49, 76) and being attachable there at the front end,
- one rolling bearing (18) guided by the bearing stub (12), the inner ring (20) of which rolling bearing (18) in the mounted state abuts on the shoulder (14) of the bearing stub (12),
- one receptacle (22) with a conically tapering contour (24) and a second thread (26) adjoining thereto,
- one wedge element (28) abutting on the conically tapering contour (24) of the receptacle (22),
wherein the bearing stub (12) and the receptacle (22) are mounted together by way of the first and the second thread (16, 26) and thus, on the one hand, the bearing inner ring (20) being axially clamped and, on the other hand, a form-locking connection as well as a press fit being produced between the wedge element (28) and the conically tapering contour (24) of the receptacle (22).

2. The bearing arrangement according to claim 1, wherein the wedge element (28) is designed as separate part.

3. The bearing arrangement according to claim 1, wherein the wedge element (28) is integrated into the bearing stub (12) and/or is structurally united with the bearing stub (12).

4. The bearing arrangement according to one of the claims 1 to 3, wherein the bearing stub (12) has at least one slot (30) running in an axial manner in the area of the thread (16).

5. The bearing arrangement according to one of the claims 1 to 4, wherein the bearing stub (12) has a further cone on the side located opposite to the thread, into which cone a conical ring element (32) can engage, wherein this ring element (32) is in turn driven into the further cone by means of a screw element (34), whereby a surface pressure is produced between the first thread (16) of the bearing stub (12) and the second thread (26) of the axle stub (36).

6. The bearing arrangement according to claim 5, wherein the screw element (34) is guided through the bearing stub (12) through an inner bore (38) thereof.

7. The bearing arrangement according to one of the claims 1 to 6, wherein the wedge element (28) has an angle that is between 10°and 50°, in particular, however, between 20° and 40°.

8. The bearing arrangement according to one of the claims 1 to 7, wherein the bearing stub (12) has a screw surface (40).

9. The bearing arrangement according to one of the claims 1 to 8, wherein the outer ring (42) of the rolling bearing (18) is fixedly connected to a frame element of the agricultural machine.

10. An agricultural machine (46) with at least one rotating roller or at least one rotating agricultural implement, wherein the roller (49, 76) or the implement is borne in a frame of the agricultural machine (46) in a rotatable manner at the front ends by way of two bearing arrangements (10), and wherein the bearing arrangements (10) are each designed according to one of the claims 1 to 9.

## Revendications

1. Ensemble de palier (10) d'une machine agricole (46) pour supporter en rotation des outils agricoles rotatifs, des rouleaux ou similaires, comprenant au moins:
- un tronçon de palier (12) changeable qui peut être associé à l'outil agricole (48) rotatif ou au rouleau (49, 76) rotatif et y peut être fixé sur le côté frontal et qui comprend au moins un épaulement (14) associé au tronçon de palier ainsi qu'un premier filetage (16),
- un palier à roulement (18) qui est guidé par le tronçon de palier (12) et dont la bague intérieure (20) s'applique contre l'épaulement (14) du tronçon de palier (12) à l'état monté,
- un logement (22) ayant un contour (24) s'étendant de façon conique et un deuxième filetage (26) y contigu,
- un élément de calage (28) qui s'applique contre le contour (24) s'étendant de façon conique du logement (22),
dans lequel le tronçon de palier (12) et le logement (22) sont montés ensemble au moyen des premier et deuxième filetages (16, 26), et, ainsi, d'une part, la bague intérieure de palier (20) est serrée axialement et, d'autre part, une liaison à engagement positif ainsi qu'un ajustement à serrage sont réalisés entre ledit élément de calage (28) et le contour (24) s'étendant de façon conique du logement (22).

2. Ensemble de palier selon la revendication 1, dans lequel ledit élément de calage (28) est conçu en tant que pièce séparée.

3. Ensemble de palier selon la revendication 1, dans lequel ledit élément de calage (28) est intégré au tronçon de palier (12) et/ou est uni de manière constructive au tronçon de palier (12).

4. Ensemble de palier selon l'une quelconque des revendications 1 à 3, dans lequel le tronçon de palier (12) comprend, au niveau du filetage (16), au moins une fente (30) s'étendant axialement.

5. Ensemble de palier selon l'une quelconque des revendications 1 à 4, dans lequel le tronçon de palier (12) présente un autre cône du côté opposé au filetage, dans lequel peut s'engager un élément annulaire conique (32), ce dernier, à son tour, étant entraîné au moyen d'un élément à visser (34) dans ledit autre cône, une pression de surface étant ainsi produite entre le premier filetage (16) du tronçon de palier (12) et le deuxième filetage (26) du bout d'axe (36).

6. Ensemble de palier selon la revendication 5, dans lequel ledit élément à visser (34) passe par un alésage intérieur (38) du tronçon de palier (12) à travers celui-ci.

7. Ensemble de palier selon l'une quelconque des revendications 1 à 6, dans lequel ledit élément de calage (28) présente un angle qui est compris entre 10° et 50°, mais en particulier entre 20° et 40 °.

8. Ensemble de palier selon l'une quelconque des revendications 1 à 7, dans lequel le tronçon de palier (12) présente une surface de vissage (40).

9. Ensemble de palier selon l'une quelconque des revendications 1 à 8, dans lequel la bague extérieure (42) du palier à roulement (18) est solidarisée à un élément de châssis de la machine agricole.

10. Machine agricole (46) comprenant au moins un rouleau rotatif ou au moins un outil agricole rotatif, dans laquelle ledit rouleau (49, 76) ou ledit outil est logé à rotation par deux ensembles de palier (10) côté frontal dans un châssis de la machine agricole (46), et dans laquelle les ensembles de palier (10) sont chacun conçus selon l'une quelconque des revendications 1 à 9.
